(19) Europäisches Patentamt / European Patent Office / Office européen des brevets

(11) **EP 1 758 292 A1**

(12) **EUROPEAN PATENT APPLICATION**
published in accordance with Art. 158(3) EPC

(43) Date of publication:
**28.02.2007 Bulletin 2007/09**

(51) Int Cl.:
*H04L 9/08* (2006.01)   *H04J 15/00* (2006.01)
*H04Q 7/38* (2006.01)   *H04B 7/04* (2006.01)

(21) Application number: **05758345.2**

(22) Date of filing: **07.07.2005**

(86) International application number:
**PCT/JP2005/012564**

(87) International publication number:
**WO 2006/011345 (02.02.2006 Gazette 2006/05)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2004 JP 2004222389**

(71) Applicant: **MATSUSHITA ELECTRIC INDUSTRIAL CO., LTD.**
**Osaka 571-8501 (JP)**

(72) Inventors:
• **YUDA, Yasuaki., c/o Matsushita El Ind.Co.Ltd**
**Osaka-shi, Osaka 540-6319 (JP)**
• **IMAI, Tomohiro.,c/o Matsushita El Ind.Co.Ltd**
**Osaka-shi, Osaka 540-6319 (JP)**
• **MIYOSHI, Kenichi.,c/o Matsushita El Ind.Co.Ltd**
**Osaka-shi, Osaka 540-6319 (JP)**

(74) Representative: **Grünecker, Kinkeldey, Stockmair & Schwanhäusser**
**Anwaltssozietät**
**Maximilianstraße 58**
**D-80538 München (DE)**

(54) **WIRELESS COMMUNICATION APPARATUS AND WIRELESS COMMUNICATION METHOD**

(57)     An inventive wireless communication apparatus that, in a wireless communication system to which a secret key scheme is applied, can generate a secret key, which is different from a secret key generated by another party, even if a wireless signal is intercepted by the third part having an approximate propagation path environment to a receiving wireless communication apparatus. In the inventive apparatus, an eigenvalue selecting part (317) of a secret key generating part (207) selects a maximum one of MIMO channel eigenvalues received from an eigenvalue detecting part (206) and inputs the selected maximum eigenvalue to a quantizing part (327). The quantizing part (327) quantizes the magnitude of the maximum eigenvalue received from the eigenvalue selecting part (317) to produce and input a quantized data to a key generating part (337). The key generating part (337) uses a predetermined scheme to generate a secret key from the quantized data received from the quantizing part (327), and inputs the generated secret key to a control part or the like not shown.

FIG.3

EP 1 758 292 A1

**Description**

Technical Field

The present invention relates to a radio communication apparatus and radio communication method for use in a radio communication system using a MIMO (Multiple Input Multiple Output) technique whereby radio communication is carried out by transmitting and receiving radio signals by a plurality of antenna elements.

Background Art

As the mobile radio communication systems including a cellular phone system and a wireless LAN become popular, there are increased chances to transmit and receive secret information, such as personal information and confidential information of companies, on these systems. Because in the mobile radio communication systems another party may intercept the radio signal easily, encryption techniques are sometimes used such that the contents are not wiretapped even if the radio signal is intercepted.

One method of the encryption techniques is a private key scheme in that a key is shared in confidence between both the transmitting and the receiving side. Because in the mobile radio communication system the radio signal may be intercepted by another party, one radio communication apparatus may not generate a key and wirelessly transmit the key to the apparatus of the communicating party. Then, a key common to the both parties needs to be generated individually.

A mobile radio communication system to that an encryption technique of such private key scheme is applied is known (for example, see Patent Document 1). In the technique described in Patent Document 1, provided that Time Division Duplex (TDD) method, the both parties carrying out communication estimate a delay profile of a propagation path and generate a private key using either one of the complex amplitude information, power information or phase information of the estimated delay profile.

Patent Document 1 : Japanese Patent Application Laid-Open No. 2003-273856

Disclosure of Invention

Problem to be Solved by the Invention

However, the technique described in Patent Document 1 has a problem that the probability that the same private key is generated by both parties carrying out communication will decrease as the Signal-to-Noise Ratio (SNR) at the receiving radio communication apparatus becomes small, because thisprobability depends on the accuracy of the delay profile at the receiving radio communication apparatus.

Then, in order to solve this problem, increase of the transmission power of the radio signal may be contemplated. However, if done so, the received power at another party in a similar propagation path environment to that of the receiving radio communication apparatus will also increase. Accordingly, a risk that this another party independently generates the same private key as the private key that the receiving radio communication apparatus generated will also increase.

It is therefore an object of the present invention to provide a radio communication apparatus and a radio communication method that, even if the radio signal is intercepted by another party in a similar propagation path environment to that of the receiving radio communication apparatus in a radio communication system adopting a private key scheme, can generate a private key different from the private key that another party generates.

Means for Solving the Problem

The radio communication apparatus according to the present invention, includes: a plurality of antennas that receive a radio signal on MIMO channels; a channel estimation section that calculates a channel estimate value of a received signal by the antennas on a per channel basis; a channel matrix generation section that generates a channel matrix of MIMO channels from the calculated channel estimate value; and a private key generation section that generates a private key using information generated by a linear operation or a nonlinear operation of the generated channel matrix.

Advantageous Effect of the Invention

According to the present invention, even if a radio signal is intercepted by another party, a private key different from the private key that this another party generates can be generated because the radio communication apparatus generates a private key using information (e.g., eigenvalues of MIMO channels) generated by a linear operation or a nonlinear operation of a channel matrix of MIMO channels.

Brief Description of Drawings

FIG. 1A is a view showing a communication mode in the case of one transmitting and receiving antenna;
FIG.1B is a view showing a communication mode in the case of a plurality of transmitting and receiving antennas;
FIG.2 is a block diagram showing the configuration of a radio communication apparatus according to Embodiment 1 of the present invention;
FIG.3 is a block diagram showing the configuration of a private key generating section shown in FIG.2;
FIG.4 is a flowchart explaining the operation of the radio communication apparatus shown in FIG. 1 ;
FIG.5 is a view explaining an eigenvalue for each channel in Embodiment 1;
FIG.6 is a view showing a correlation between the total number of antenna elements in a radio communication apparatus and the gain of the maximum eigenvalue;
FIG.7 is a view explaining the operation of an eigenvalue selection section shown in FIG.3;
FIG.8 is a view explaining a modification of the operation of the eigenvalue selection section shown in FIG.3;
FIG.9 is a block diagram showing the configuration of a private key generating section in Embodiment 2 of the present invention;
FIG.10 is a view explaining the operation of a private key generating section shown in FIG.9;
FIG.11 is a block diagram showing the configuration of a radio communication apparatus in Embodiment 3 of the present invention; and
FIG.12 is a view explaining the operation of the radio communication apparatus shown in FIG.11.

Best Mode for Carrying Out the Invention

The present invention utilizes a MIMO technique in a radio communication system adopting a private key scheme, where a base station apparatus ("BS") and a communication terminal apparatus ("MS") generate a private key individually using information generated by a linear operation or a nonlinear operation from a channel matrix of MIMO channels.

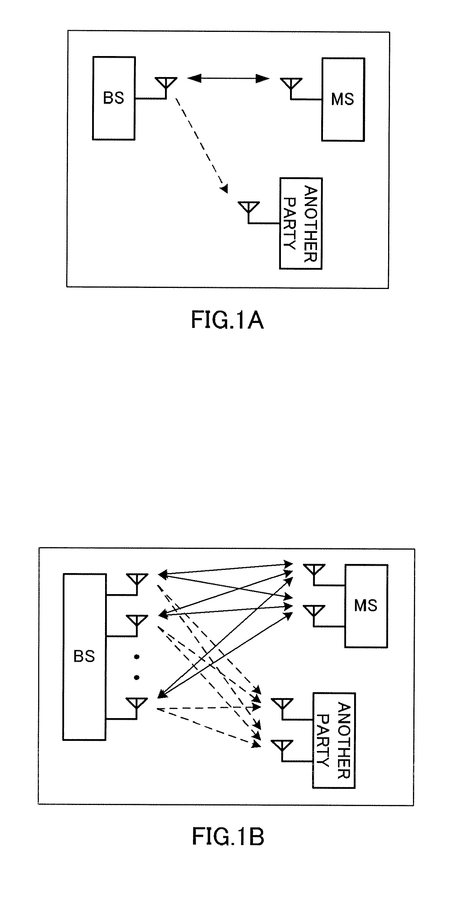

Here, the overview of the MIMO technique is described using FIG.1A and FIG.1B. FIG.1A shows a communication mode in that BS and MS are each provided with one antenna element, whereby radio communication is carried out between these BS and MS. Moreover, in FIG.1A, assume that another party is physically located in a place near MS and that the propagation path environments of MS and another party are similar.

For this reason, in the communication mode shown in FIG.1A, a radio signal transmitted from BS to MS may be intercepted by another party. Then, if both MS and another party generate a private key from the received signal using the same scheme, the generated private keys may be the same even if MS and another party generate a private key independently, because the correlation between the received signal of MS and the received signal of another party is high.

On the other hand, in the radio communication system using the MIMO technique as shown in FIG.1B, channels will be formed between a plurality of antenna elements that BS is provided with, and a plurality of antenna elements that MS is provided with. In other words, the MIMO channels are formed. For this reason, even if another party is located near MS, it is difficult for another party to intercept all the radio signals transmitted from BS to MS, and, even if another party could intercept all the radio signals, the correlation between all the received signals that another party intercepted and the received signals of MS will decrease for sure as compared with the case of the communication mode of FIG. 1A.

Accordingly, if the MIMO technique is used in the radio communication system that a private key scheme is being applied to, the interception of the radio signal by another party may be avoided easily, and, even if all the radio signals are intercepted by another party, the risk that another party generates the same private key as that of MS may be reduced.

Hereinafter, embodiments of the present invention will be described in detail with reference to the accompanying drawings.

(Embodiment 1)

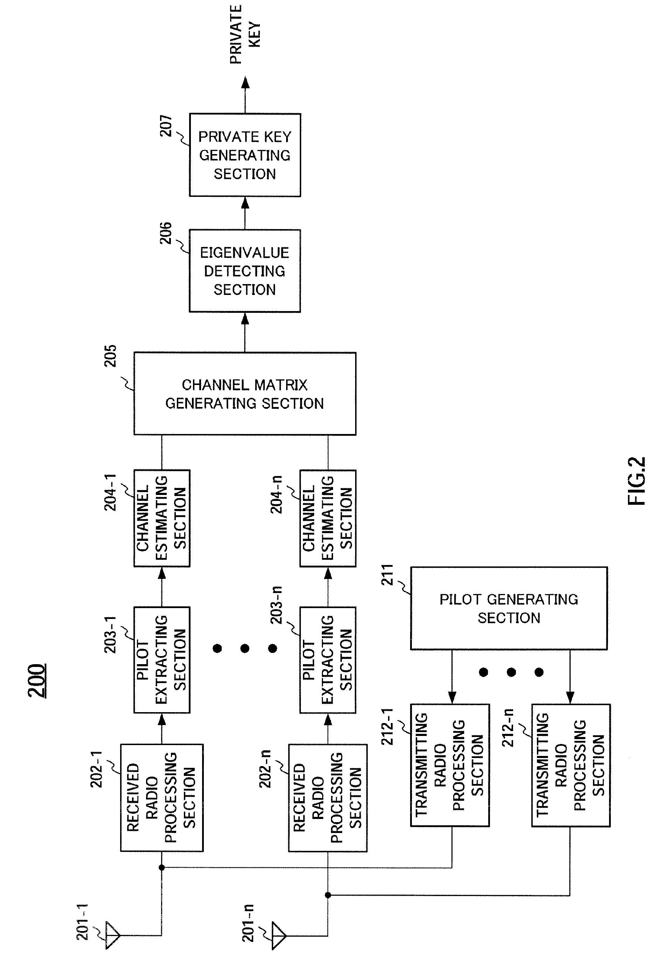

FIG.2 is a block diagram showing the configuration of a radio communication apparatus 200 according to Embodiment 1 of the present invention. In addition, in this Embodiment, assume that the radio communication apparatus 200 is mounted in both BS constituting a radio communication system, and MS, such as a cellular phone.

The radio communication apparatus 200 comprises a plurality of antenna elements 201-1 to 201-n, a plurality of received radio processing sections 202-1 to 202-n, a plurality of pilot extracting sections 203-1 to 203-n, a plurality of channel estimating sections 204-1 to 204-n, a channel matrix generating section 205, an eigenvalue detecting section 206, a private key generating section 207, a pilot generating section 211, and a plurality of transmitting radio processing sections 212-1 to 212-n.

The antenna elements 201-1 to 201-n capture radio signals transmitted from a plurality of antenna elements of the apparatus of the communicating party, and input a received signal to the received radio processing sections 202-1 to 202-n.

The received radio processing sections 202-1 to 202-n comprise a bandpass filter, an analog/digital converter, a low noise amplifier, and the like, carry out a known received signal processing to the received signal inputted from the antenna elements 201-1 to 201-n, and input the processed received signals to the pilot extracting sections 203-1 to 203-n.

The pilot extracting sections 203-1 to 203-n extract pilot signal from the received signal inputted from the received radio processing sections 202-1 to 202-n, and input the extracted pilot signal to the channel estimating sections 204-1 to 204-n.

The channel estimating sections 204-1 to 204-n carry out channel estimation for each channel formed between a plurality of antenna elements in the apparatus of the communicating party and the antenna elements 201-1 to 201-n, by using the pilot signal inputted from the pilot extracting sections 203-1 to 203-n, and inputs the calculated channel estimate value for each channel to the channel matrix generating section 205.

The channel matrix generating section 205 generates a channel matrix of MIMO channels from the channel estimate value for each channel, inputted from the channel estimating sections 204-1 to 204-n, and inputs the generated channel matrix to the eigenvalue detecting section 206. In addition, the details of the channel matrix of MIMO channels and generation process thereof will be described later.

The eigenvalue detecting section 206 detects the eigenvalue of the MIMO channels from the channel matrix inputted from the channel matrix generating section 205 and inputs the detected eigenvalue of the MIMO channels to the private key generating section 207. In addition, the details of the detection process of the eigenvalue of the MIMO channels will also be described later.

The private key generating section 207 selects the maximum eigenvalue in the eigenvalues of the MIMO channels inputted from the eigenvalue detecting section 206, generates a private key using the selected maximum eigenvalue, and inputs the generated private key to a controlling section or the like (not shown).

The pilot generating section 211 generates a pilot signal at a predefined timing and inputs the generated pilot signal to the transmitting radio processing sections 212-1 to 212-n.

The transmitting radio processing sections 212-1 to 212-n comprise a bandpass filter, a digital to analog converter, a low noise amplifier, etc., and carry out a predetermined transmission signal processing to the pilot signal inputted from the pilot generating section 211 and thereafter wirelessly transmit the pilot signal through the antenna elements 201-1 to 201-n.

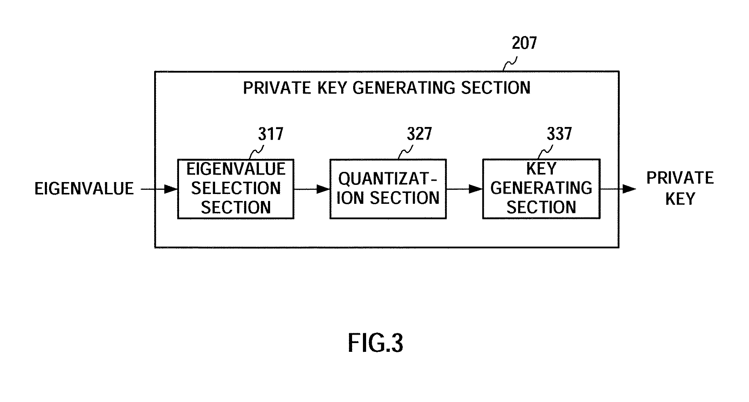

FIG.3 is a block diagram showing a more detailed configuration of the private key generating section 207. The private key generating section 207 comprises an eigenvalue selection section 317, a quantization section 327, and a key generating section 337.

The eigenvalue selection section 317 selects the maximum eigenvalue in the eigenvalues of the MIMO channels inputted from the eigenvalue detecting section 206 and inputs the selected maximum eigenvalue to the quantization section 327.

The quantization section 327 quantizes in a predetermined number of quantization bits the magnitude of the maximum eigenvalue inputted from the eigenvalue selection section 317 to generate quantization data and inputs the generated quantization data to the key generating section 337.

The key generating section 337 generates a private key using a predetermined scheme such as a method of extending the data length a predetermined number of times in repetition, the quantization data inputted from the quantization section 327, and inputs the generated private key to a controlling section (not shown) or the like.

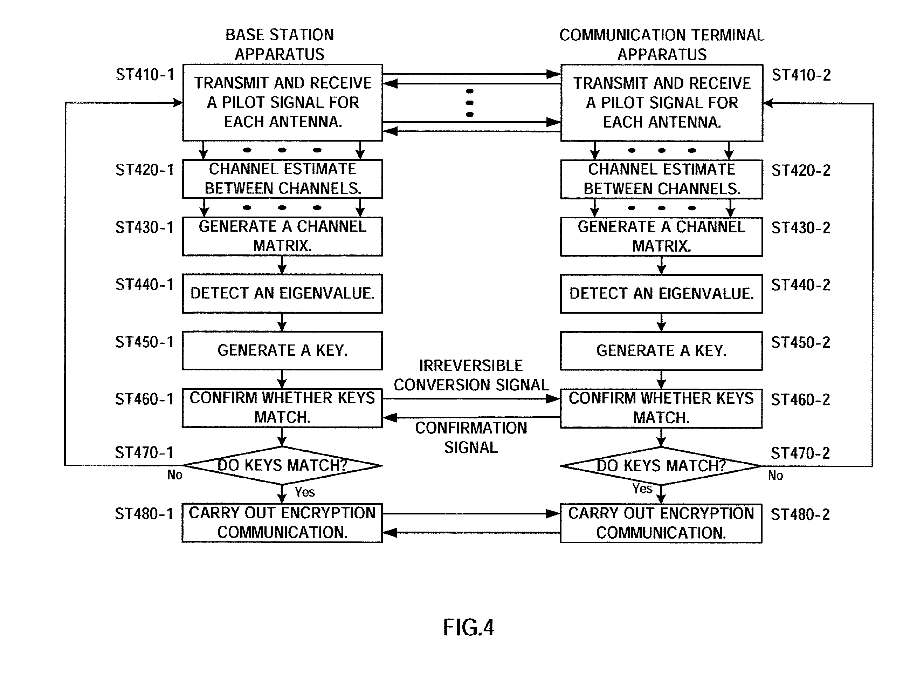

Next, the operation of each configuration part in the radio communication apparatus 200 will be described with reference to FIG.4 to FIG.7.

FIG.4 is a flowchart showing steps until the same private key is generated in BS provided with the radio communication apparatus 200 and MS provided with the radio communication apparatus 200, and communication is started between these. Moreover, in FIG.4, a branch number "1" is given to each step carried out by BS, and similarly a branch number "2" is given to each step carried out by MS. In addition, in the followings, the steps in that the operations of BS and MS are the same are described without giving the branch number in order to avoid the duplication of description.

At Step ST410, BS and MS wirelessly transmit a pilot signal to each other from the antenna elements 201-1 to 201-n sequentially, and the receiving apparatus receives the transmitted pilot signal sequentially at all the antenna elements 201-1 to 201-n.

At Step ST420, in BS and MS, the channel estimating section 204 carries out channel estimation for each channel, that is formed between the antenna elements 201-1 to 201-n of BS and the antenna elements 201-1 to 201-n of MS.

At Step ST430, in BS and MS, the channel estimating section 204 generates a channel matrix of MIMO channels from the channel estimate value that was calculated in Step ST420. "Equation 1" below exemplifies a channel matrix H. Each element h(i,j) in this channel matrix H represents a channel estimate value of the pilot signal, that is transmitted from a j-th antenna element 201-j in the transmitting apparatus and is received by an i-th antenna element 201-i of the receiving apparatus. In addition, M is the total number of the transmitting antenna elements and N is the total number of the receiving antenna elements. Accordingly, in this Embodiment both M and N are "n."

[Equation 1]

$$H = \begin{bmatrix} h_{(1,1)} & & \cdots & & h_{(1,M)} \\ & \ddots & & & \vdots \\ \vdots & & h_{(i,j)} & & \\ h_{(N,1)} & \cdots & & & h_{[N,M]} \end{bmatrix} \cdots \text{(Equation 1)}$$

In Step ST440, in BS and MS, the eigenvalue of the MIMO channels is detected using the channel matrix H expressed by Equation 1. The method of detecting this eigenvalue includes, for example, a method in that a correlation matrix is calculated from the channel matrix H, and the correlation matrix is eigenvalue/eigenvector decomposed to thereby calculate the eigenvalue. Moreover, a method in that an eigenvalue is calculated by squaring a singular value obtained by singular value decomposing the channel matrix, and the like are listed. This Embodiment employs the former method. A correlation matrix R is expressed by "Equation 2" below using the channel matrix H. In addition, the superscript "H" in Equation 2 is conjugate transposition.

[Equation 2]

$$R = HH^{H} \quad \cdots ( \text{Equation 2})$$

Then, after being eigenvalue/eigenvector decomposed, the correlation matrix R is expressed by "Equation 3" below. In addition, "Λ" in Equation 3 is the eigenvalues of the MIMO channels, and "V" is the eigenvector of the MIMO channels.

[Equation 3]

$$R = V\Lambda V^{H} \cdots \text{(Equation 3)}$$

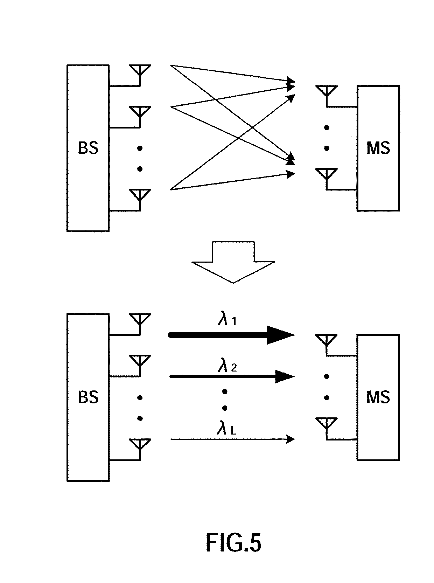

FIG.5 shows the significance of the relationship between the eigenvalues of the MIMO channels and each channel. In the MIMO technique, a plurality of channels existing between BS and MS having the same average power, may be transformed to a plurality of eigenspaces. Then, the one representing the power of the eigenspace is the eigenvalue of the MIMO channels. More specifically, the eigenvalue of the MIMO channels may be the condition required to consider that one-to-one channel is formed between the antenna elements 201-1 to 201-n of BS and the antenna elements 201-1 to 201-n of MS, respectively, as shown in the lower part of FIG.5. Here, if the eigenvalue λ for each eigenspace in the eigenvalue Λ of the MIMO channels in Equation 3 is listed in descending order, the following "Equation 4" is obtained.

[Equation 4]

$$\lambda_1 \geq \lambda_2 \geq \cdots \geq \lambda_L \geq 0 \cdots \text{(Equation 4)}$$

In Equation 4, $\lambda_i$ (1<=i<=L) represents the eigenvalue of the i-th largest eigenspace in the eigenvalue Λ of the MIMO channels, and L is the rank of the channel matrix (i.e. , the total number of a smaller one among the total number of the antenna elements of BS and the total number of the antenna elements of MS). In addition, in this Embodiment, L in Equation 4 is n. Moreover, the sum total of the eigenvalue λ of the eigenspace in the receiving apparatus is equivalent to the total receiving power because the magnitude of this eigenvalue λ for each eigenspace represents the power of the eigenspace. Accordingly, let the total power be $P_{total}$ and L=N, then a relationship expressed by Equation 5 below is obtained.

[Equation 5]

$$P_{total} = \sum_{i}^{N} \lambda_i \quad \cdots \text{(Equation 5)}$$

Moreover, let the average received power for each antenna element at the receiving apparatus be $P_{ave}$, then the relationship expressed in Equation 6 below is satisfied between the total power $P_{total}$ and Pave.

[Equation 6]

$$P_{total} = N \cdot P_{ave} \quad \cdots \text{(Equation 6)}$$

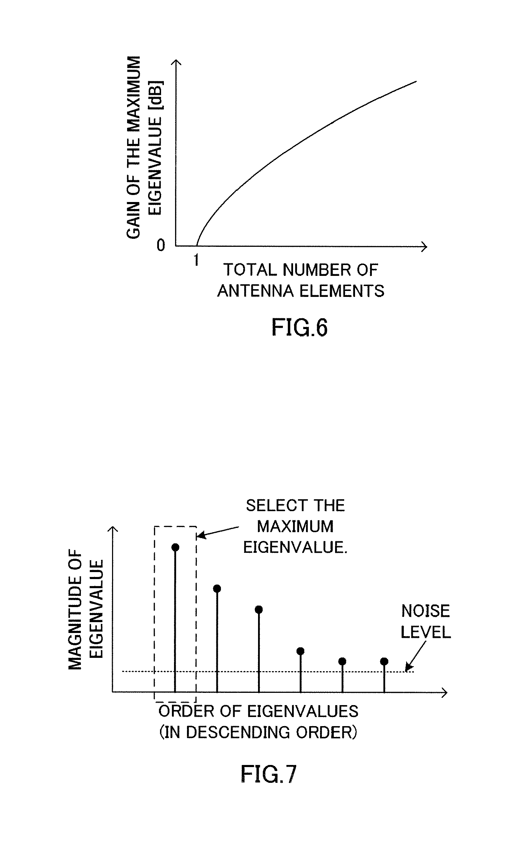

As expressed by Equation 4, the magnitude of the eigenvalue λ of the eigenspace disperses, so the eigenvalue satisfying $\lambda_i > P_{ave}$ always exists. Then, as shown in FIG.6, the gain of the magnitude of the maximum eigenvalue with respect to the average received power for each of the receiving antenna elements 201-1 to 201-n increases as the total number of the receiving antenna elements 201-1 to 201-n increases. Accordingly, in this Embodiment, as shown in FIG. 7, the eigenvalue selection section 317 selects the maximum eigenvalue $\lambda_i$ in the eigenvalue Λ of the MIMO channels generated from the channel matrix H, thereby achieving the SNR higher than the average SNR for each of the receiving antenna elements 201-1 to 201-n for sure.

In Step ST450, in BS and MS, a private key is generated using the maximum eigenvalue selected in Step ST440. In Step ST450, the quantization section 327 quantizes in a predetermined number of quantization bits the magnitude of the maximum eigenvalue inputted from the eigenvalue selection section 317 to generate quantization data, and inputs the generated quantization data to the key generating section 337. Then, the key generating section 337 generates a private key by repeating or replacing this quantization data by a predetermined scheme.

In Step ST460, BS and MS mutually confirm whether or not the private keys that were generated individually are the same. In this Embodiment, BS and MS carry out a non-restorable irreversible conversion to the private keys that were generated individually, and BS wirelessly transmits to MS a signal to that this irreversible conversion is applied. Then, MS compares this received signal with a signal, to that the irreversible conversion is applied at its own apparatus, and confirms whether or not the signals to that the irreversible conversion is applied match, and wirelessly transmits to BS a confirmation signal indicating this confirmed result. Incidentally, an example of a signal to that such irreversible conversion is applied is the signal to that the Hash Function is applied.

In Step ST470-1, if the confirmation signal transmitted from MS indicates that the signals to that the irreversible conversion is applied match, BS carries out Step ST480-1, continuously. On the other hand, if the confirmation signal transmitted from MS indicates that the signals to that the irreversible conversion is applied do not match, BS discards the private key generated at BS and starts from Step ST410-1 again.

In a similar manner, in Step ST470-2, if the signals to that the irreversible conversion is applied match, MS carries out Step ST480-2 continuously, while if the signals to that the irreversible conversion is applied do not match, MS discards the private key generated at MS and starts from Step ST410-2 again.

In Step ST480, BS and MS start radio communication using the private keys that are generated individually.

In this way, according to the radio communication apparatus 200 according to this Embodiment, because the private key generating section 207 selects the maximum eigenvalue from the eigenvalues of the MIMO channels and generates a private key using this maximum eigenvalue, a higher SNR than the average SNR for each of the receiving antenna elements 201-1 to 201-n can be achieved, and it is therefore possible to improve the probability that the private keys generated at the radio communication apparatus 200 and at the apparatus of the communicating party match.

In addition, the radio communication apparatus 200 according to this Embodiment maybe applied or modified as follows.

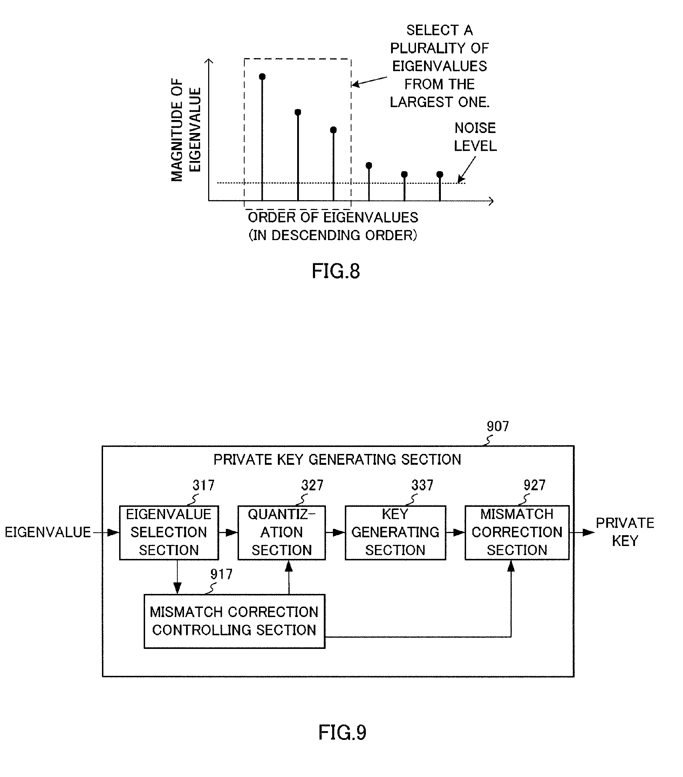

Although with the radio communication apparatus 200 according to this Embodiment a case has been described in that the eigenvalue selection section 317 selects the maximum eigenvalue from the eigenvalues of the MIMO channels inputted from the eigenvalue detecting section 206, the present invention is not limited to this case, and, for example, the eigenvalue selection section 317 may select an eigenvalue whose ratio to the sum total of the eigenvalues of the MIMO channels inputted from the eigenvalue detecting section 206 is a predetermined value or more (i.e., the eigenvalue of the eigenspace). For example, in the example shown in FIG.8, three largest eigenvalues are selected from the eigenvalues of the MIMO channels and are inputted to the quantization section 327. If done this way, the security of the private key may be improved without decreasing the probability that the private keys that BS and MS generate individually match, because the quantization section 327 may increase the data amount of quantization data without increasing the number of quantization bits.

Moreover, although in this Embodiment a case has been described in that, in Step ST410, BS and MS wirelessly transmit a pilot signal sequentially from the antenna elements 201-1 to 201-n, the present invention is not limited to this case, and, for example, in Step ST410, BS and MS may assign unique spreading codes to the antenna elements 201-1 to 201-n and wirelessly transmit pilot signals that are code-divided by these spreading codes, simultaneously, from the antenna elements 201-1 to 201-n. By this means, it is possible to reduce the time required for transmission and reception of the pilot signal and start communication using the private key earlier, because one received signal is code division multiplexed for each channel in the receiving apparatus.

(Embodiment 2)

In Embodiment 2 of the present invention, an error correction decode processing is carried out to the private key that the radio communication apparatus 200 generated, and furthermore the error correction capability is controlled on the basis of the magnitude of the maximum eigenvalue. For this reason, the radio communication apparatus 200 according to this Embodiment comprises a private key generating section 907 shown in FIG. 9 in place of the private key generating section 207 in the radio communication apparatus 200 according to Embodiment 1. Hereinafter, according to this Embodiment, only the points different from Embodiment 1 are described in order to avoid duplication.

FIG.9 is a block diagram showing the configuration of the private key generating section 907 in this Embodiment. The private key generating section 907 comprises the eigenvalue selection section 317, the quantization section 327, the key generating section 337, a mismatch correction controlling section 917, and a mismatch correction section 927.

The mismatch correction controlling section 917 directs the quantization section 327 to increase and decrease the number of quantization bits based on the magnitude of the maximum eigenvalue inputted from the eigenvalue selection section 317, and also directs the mismatch correction section 927 to increase and decrease the data amount of redundant data used for error correction processing.

The mismatch correction section 927 regards a private key inputted from the key generating section 337 as an error correction coded signal, and carries out the error correction decode processing by treating a part of the data (i.e., the data amount indicated by the mismatch correction controlling section 917) as the redundant data. Then, the mismatch correction section 927 inputs the private key after error correction decode processing to a controlling section or the like (not shown). In addition, if the location of the data to be used as the redundant data is indicated from the mismatch correction controlling section 917, the mismatch correction section 927 carries out the error correction processing to the private key in accordance with this instruction.

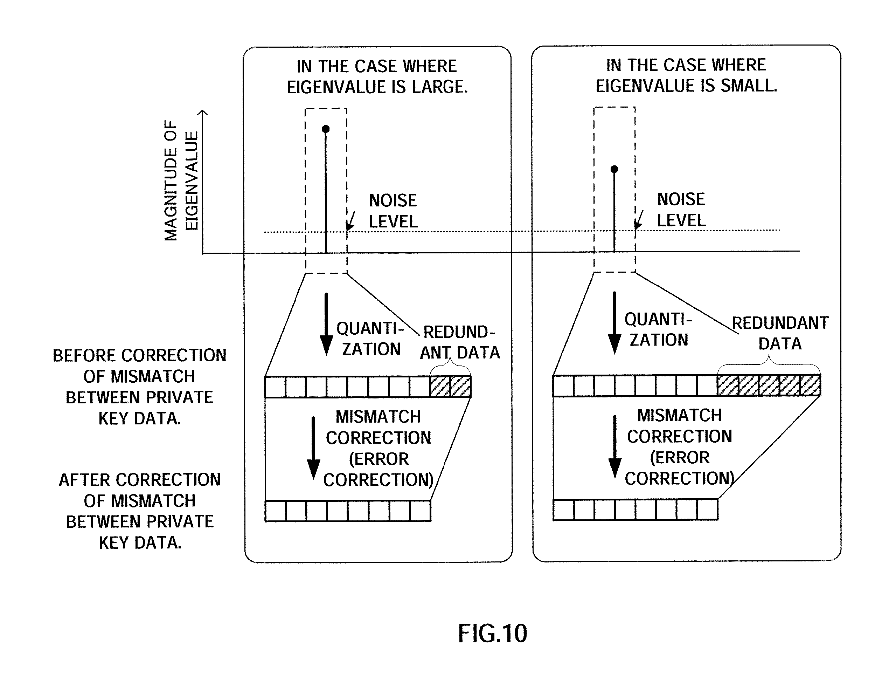

Next, the operation of the private key generating section 907 is described in detail focusing on the operation of the mismatch correction controlling section 917, using FIG.10.

According to the magnitude of the maximum eigenvalue inputted from the eigenvalue selection section 317, the mismatch correction controlling section 917 directs the quantization section 327 to decrease the number of quantization bits and suppress the data amount of the quantization data to be generated, if the maximum eigenvalue is large (in the left box of FIG. 10) . Moreover, it will inform the mismatch correction section 927 of the data amount of the suppressed redundant data that is contained in the private key inputted from the key generating section 337.

Here, the method of determining the large and small of the maximum eigenvalue in the mismatch correction controlling section 917 includes, for example, a method of determining based on the ratio of the magnitude of the maximum eigenvalue with respect to the sum total of the eigenvalues for each eigenspace in the eigenvalues of the MIMO channels. Moreover, a method of determining based on the magnitude of the maximum eigenvalue with respect to the average received power of the antenna elements 201-1 to 201-n, is possible.

If the mismatch correction controlling section 917 determined that the maximum eigenvalue inputted from the eigenvalue selection section 317 is large, this means that the influence of noise on the maximum eigenvalue is small (i.e., the SNR is large), and it is therefore not necessary to increase the number of quantization bits in the quantization section 327.

On the other hand, the mismatch correction controlling section 917 directs the quantization section 327 to increase the number of quantization bits and increase the data amount of the generated quantization data, if the maximum eigenvalue inputted from the eigenvalue selection section 317 is small (in the right box of FIG.10). Moreover, it will also inform the mismatch correction section 927 of the data amount of the increased redundant data that is contained in the private key inputted from the key generating section 337.

If the mismatch correction controlling section 917 determined that the maximum eigenvalue inputted from the eigenvalue selection section 317 is small, this means that the influence of noise on the maximum eigenvalue is large (i.e., the SNR is small), and it is therefore necessary to correct the potential error in the private key caused by noise. Then, in this case, the mismatch correction controlling section 917 will increases the number of quantization bits in the quantization section 327 and increase the data amount of the redundant data contained in the private key, thereby improving the error correction capability of the private key by the mismatch correction section 927.

In this way, according to the radio communication apparatus 200 according to this Embodiment, because in the private key generating section 907 the private key is regarded as an error correction coded signal and is error correction decoded, it is possible to further improve the probability that the private keys individually generated at the radio communication apparatus 200 and the apparatus of the communicating party match.

Moreover, because in this Embodiment the mismatch correction controlling section 917 controls both the number of quantization bits in the quantization section 327 and the data amount of the redundant data in the mismatch correction section 927, it is possible to keep constant the data length (the number of bits) of the private key after error correction decode processing, and suppress an increase of the load of signal processing in a controlling section or the like (not shown).

(Embodiment 3)

Generally, with the private key, security improves as the data length becomes longer. Then, in Embodiment 3 according to the present invention, a mode is described in that a radio communication apparatus 1100 detects the frequency response of the eigenvalue of the MIMO channels, and combines the frequency responses of the eigenvalue to generate a private key, thereby extending the data length of the private key and improving the security.

The radio communication apparatus 1100 according to this Embodiment comprises a plenty of configuration parts that exhibit the same functions as those of the configuration parts in the radio communication apparatus 200 according to Embodiment 1. So, in this Embodiment, only the points different from Embodiment 1 are described in order to avoid duplication.

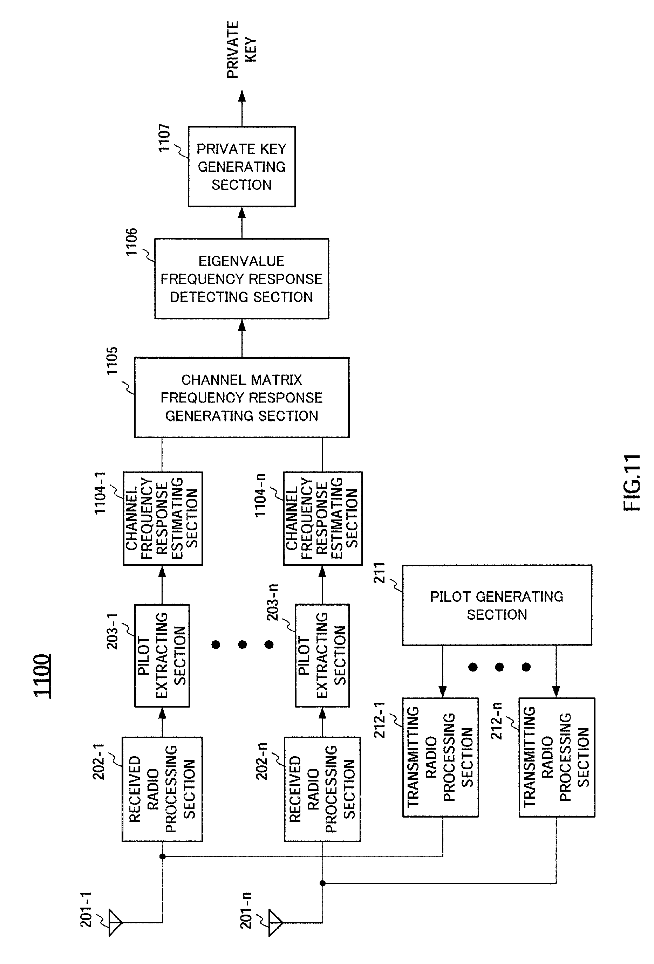

FIG. 11 is a block diagram showing the configuration of the radio communication apparatus 1100 according to this Embodiment. The radio communication apparatus 1100 comprises, in the radio communication apparatus 200 according to Embodiment 1: channel frequency response estimating sections 1104-1 to 1104-n in place of the channel estimating sections 204-1 to 204-n; a channel matrix frequency response generating section 1105 in place of the channel matrix generating section 205; an eigenvalue frequency response detecting section 1106 in place of the eigenvalue detecting section 206; and a private key generating section 1107 in place of the private key generating section 207. Moreover, in this Embodiment, a multicarrier signal (e.g., an OFDM (Orthogonal Frequency Division Multiplexing) signal) is employed as the radio signal.

The channel frequency response estimating sections 1104-1 to 1104-n estimate the frequency response for each channel from the impulse response of the pilot signal inputted from the pilot extracting sections 203-1 to 203-n. Specifically, the channel frequency response estimating sections 1104-1 to 1104-n calculate the frequency response of the channel estimate value of an OFDM signal that is the pilot signal (i.e., the channel estimate value for each channel of the OFDM signal and for each subcarrier). The channel frequency response estimating sections 1104-1 to 1104-n input the calculated frequency response of the channel estimate value to the channel matrix frequency response generating section 1105.

The channel matrix frequency response generating section 1105 generates a frequency response of the channel matrix from the frequency response of the channel estimate value inputted from the channel frequency response estimating sections 1104-1 to 1104-n (i.e., a channel matrix of MIMO channels whose elements are the channel estimate values for each channel of the OFDM signal and for each subcarrier). Then, the channel matrix frequency response generating section 1105 inputs the generated frequency response of the channel matrix to the eigenvalue frequency response detecting section 1106.

Using the frequency response of the channel matrix inputted from the channel matrix frequency response generating section 1105, the eigenvalue frequency response detecting section 1106 detects the frequency response of the eigenvalue of the MIMO channels (i.e., a group of the eigenvalues for each channel of the OFDM signal and for each subcarrier). Then, the eigenvalue frequency response detecting section 1106 inputs the detected frequency response of the eigenvalue of the MIMO channels to the private key generating section 1107.

The private key generating section 1107 generates a private key using the frequency responses of the eigenvalues of the MIMO channels inputted from the eigenvalue frequency response detecting section 1106. A specific mode of generating a private key in this private key generating section 1107 is described next.

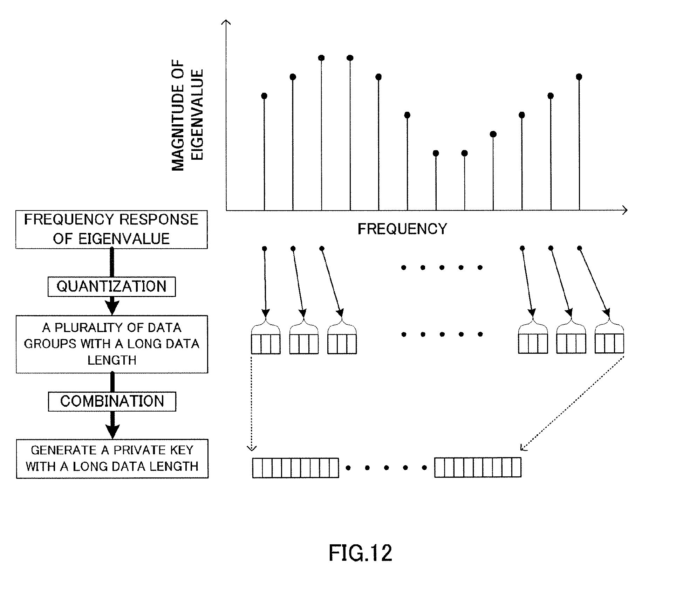

FIG.12 shows the operation of the private key generating section 1107 more specifically. The upper part of FIG.12 describes the frequency response of the eigenvalue of a specific eigenspace in the frequency responses of the eigenvalues of the MIMO channels inputted from the eigenvalue frequency response detecting section 1106. In addition, the mode of selecting the frequency response of the eigenvalue of a specific eigenspace shown in the upper part of FIG. 12 from the frequency responses of the eigenvalues of the MIMO channels includes, for example, a mode of selecting an eigenspace in that eigenspace the average value of the frequency responses of the eigenvalues for each eigenspace is the largest.

Moreover, for the frequency response of the eigenvalue of the selected specific eigenspace, the private key generating section 1107 quantizes in a predetermined number of quantization bits the magnitude of the eigenvalue for each frequency (i.e., for each subcarrier) to thereby generate the quantization data. Here, in determining the number of quantization bits, the private key generating section 1107 may generate quantization data less influenced by noise by making the quantization width sufficiently larger than the magnitude of the noise with reference to the SNR of the eigenvalue for each subcarrier of the specific eigenspace.

Then, the private key generating section 1107 may generate a private key with a long data length and high security by suitably selecting and combining the generated quantization data. Moreover, the private key generating section 1107 may improve the probability that the private keys individually generated at its own apparatus and the apparatus of the communicating party match, by selecting only the quantization data generated from the eigenvalues with a high SNR at the time of suitably selecting and combining the generated quantization data.

In this way, according to the radio communication apparatus 1100 according to this Embodiment, because the quantization data is generated from the frequency response of the eigenvalue of a specific eigenspace from the eigenvalues of the MIMO channels, a plenty of high-quality quantization data less influenced by noise may be obtained. Moreover, because the private key is generated usingtheseplentyofhigh-quality quantization data, the data length of the private key may be extended and the security of the private key may be improved.

In addition, although in this Embodiment, in order to extend the data length of the private key, the frequency response is used to thereby obtain a plenty of quantization data, a plenty of quantization data may be also obtained using time response. That is, by obtaining the eigenvalues of the MIMO channels over a long time period, a plenty of quantization data may be obtained, and thus, like this Embodiment, the data length of the private key may be extended and the security of the private key may be improved.

In addition, although in each of the above Embodiments, a case has been described in that the eigenvalues of the MIMO channels are used as the information generated by a linear operation or a nonlinear operation from the channel matrix of MIMO channels, the present invention is not limited to this case, and, for example, a correlation coefficient representing the correlation relationship between channels, a correlation matrix representing a correlation matrix between channel matrices, or an eigenvector obtained from the eigenvalue decomposition may be used as the information generated by a linear operation or a nonlinear operation from the channel matrix.

Although in each of the above Embodiments, a case where the present invention is constituted by hardware has been described as an example, the present invention may also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC, " "system LSI," "super LSI, " or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application in biotechnology is also possible.

A first aspect of the present invention provides a radio communication apparatus having: a plurality of antennas that receive a radio signal on MIMO channels; a channel estimation section that calculates an channel estimate value of a received signal by the antennas on a per channel basis; a channel matrix generation section that generates a channel matrix of the MIMO channels from the calculated channel estimate value; and a private key generation section that generates a private key using information generated by a linear operation or a nonlinear operation of the generated channel matrix.

A second aspect of the present invention provides a radio communication apparatus, which, in the above-described invention, further has an eigenvalue detection section that detects the eigenvalue of the MIMO channels from the generated channel matrix, and in which the private key generation section generates a private key using the detected eigenvalues of the MIMO channels.

A third aspect of the present invention provides a radio communication apparatus, in which, in the above-described invention, the private key generation section generates a private key using the maximum eigenvalue in the detected eigenvalues of the MIMO channels.

A fourth aspect of the present invention provides a radio communication apparatus, in which, in the above-described invention, the private key generation section generates a private key using an eigenvalue a ratio of which to a sum total of the detected eigenvalues of the MIMO channels is equal to or greater than a predetermined value.

A fifth aspect of the present invention provides a radio communication apparatus, in which, in the above-described invention, the private key generation section has: a quantization section that quantizes the magnitude of the detected eigenvalue of the MIMO channels and generates quantization data; a key generation section that generates key data from the generated quantization data; and a correction section that carries out error correction processing of the key data using part of the generated key data as redundant data.

A sixth aspect of the present invention provides a radio communication apparatus, in which, in the above-described invention, the private key generation section further has a control section that measures the magnitude of the detected eigenvalue of the MIMO channels and that, according to the magnitude of the measured eigenvalue, causes the correction section reduce the amount of data used as redundant data to reduce the number of quantization bits in the quantization section and causes the correction section increase the amount of data used as redundant data to increase the number of quantization bits in the quantization section.

A seventh aspect of the present invention provides a radio communication apparatus, in which, in the above-described invention, the received signal at the antennas is a multicarrier signal; the channel estimation section calculates a frequency response of a channel estimate value of the received multicarrier signal; the channel matrix generation section generates a frequency response of the channel matrix from the frequency response of the calculated channel estimate value; the eigenvalue detection section detects the frequency response of the eigenvalue of the MIMO channels from the generated frequency response of the channel matrix; and the private key generation section generates a private key using the frequency response of the eigenvalue of the MIMO channels detected by the eigenvalue detection section.

An eighth aspect of the present invention provides a radio communication method including the steps of: receiving a radio signal on MIMO channels by a plurality of antennas; calculating a channel estimate value of a received signal by the antenna on a per channel basis; generating a channel matrix of the MIMO channels from the calculated channel estimate value; and generating a private key by using information generated by a linear operation or a nonlinear operation of the generated channel matrix.

This specification is based on Japanese Patent Application No.2004-222389, filed on July 29, 2004, the entire content of that is expressly incorporated by reference herein.

Industrial Applicability

A radio communication apparatus according to the present invention has an advantage that even if a radio signal is intercepted by another party, a private key different from the private key that this another party generates may be generated by exploiting the features of a MIMO technique, and the radio communication apparatus is therefore useful as a radio communication method and the like for use in the radio communication system using the MIMO technique.

**Claims**

1. A radio communication apparatus comprising:

   a plurality of antennas that receive a radio signal on MIMO channels;
   a channel estimation section that calculates an channel estimate value of a received signal by the antennas on a per channel basis;
   a channel matrix generation section that generates a channel matrix of the MIMO channels from the calculated channel estimate value; and
   a private key generation section that generates a private key using information generated by a linear operation or a nonlinear operation of the generated channel matrix.

2. The radio communication apparatus according to claim 1, further comprising an eigenvalue detection section that detects an eigenvalue of the MIMO channels from the generated channel matrix, wherein the private key generation section generates a private key using the detected eigenvalue of the MIMO channels.

3. The radio communication apparatus according to claim 2, wherein the private key generation section generates a private key using the maximum eigenvalue in the detected eigenvalues of the MIMO channels.

4. The radio communication apparatus according to claim 2, wherein the private key generation section generates a private key using an eigenvalue a ratio of which to a sum total of the detected eigenvalues of the MIMO channels is equal to or greater than a predetermined value.

5. The radio communication apparatus according to claim 2, wherein the private key generation section comprises:

a quantization section that quantizes the magnitude of the detected eigenvalue of the MIMO channels to generate quantization data;
a key generation section that generates key data from the generated quantization data; and
a correction section that carries out error correction processing of the key data using part of the generated key data as redundant data.

6. The radio communication apparatus according to claim 5, wherein the private key generation section further comprises a control section that measures the magnitude of the detected eigenvalue of the MIMO channels and that, according to the magnitude of the measured eigenvalue, causes the correction section reduce the amount of data used as redundant data to reduce the number of quantization bits in the quantization section and causes the correction section increase the amount of data used as redundant data to increase the number of quantization bits in the quantization section.

7. The radio communication apparatus according to claim 2, wherein:

the received signal at the antennas is a multicarrier signal;
the channel estimation section calculates a frequency response of a channel estimate value of the received multicarrier signal;
the channel matrix generation section generates a frequency response of the channel matrix from the frequency response of the calculated channel estimate value;
the eigenvalue detection section detects the frequency response of the eigenvalue of the MIMO channels from the generated frequency response of the channel matrix; and
the private key generation section generates a private key using the frequency response of the eigenvalue of the MIMO channels detected by the eigenvalue detection section.

8. A radio communication method, comprising the steps of:

receiving a radio signal on MIMO channels by a plurality of antennas;
calculating a channel estimate value of a received signal by the antenna on a per channel basis;
generating a channel matrix of the MIMO channels from the calculated channel estimate value; and
generating a private key by using information generated by a linear operation or a nonlinear operation of the generated channel matrix.

FIG.1A

FIG.1B

FIG.2

FIG.3

FIG.4

**COMMUNICATION TERMINAL APPARATUS**

- ST410-2: TRANSMIT AND RECEIVE A PILOT SIGNAL FOR EACH ANTENNA.
- ST420-2: CHANNEL ESTIMATE BETWEEN CHANNELS.
- ST430-2: GENERATE A CHANNEL MATRIX.
- ST440-2: DETECT AN EIGENVALUE.
- ST450-2: GENERATE A KEY.
- ST460-2: CONFIRM WHETHER KEYS MATCH.
- ST470-2: DO KEYS MATCH? — No / Yes
- ST480-2: CARRY OUT ENCRYPTION COMMUNICATION.

**BASE STATION APPARATUS**

- ST410-1: TRANSMIT AND RECEIVE A PILOT SIGNAL FOR EACH ANTENNA.
- ST420-1: CHANNEL ESTIMATE BETWEEN CHANNELS.
- ST430-1: GENERATE A CHANNEL MATRIX.
- ST440-1: DETECT AN EIGENVALUE.
- ST450-1: GENERATE A KEY.
- ST460-1: CONFIRM WHETHER KEYS MATCH.
- ST470-1: DO KEYS MATCH? — No / Yes
- ST480-1: CARRY OUT ENCRYPTION COMMUNICATION.

IRREVERSIBLE CONVERSION SIGNAL

CONFIRMATION SIGNAL

FIG.5

FIG.6

FIG.7

SELECT A
PLURALITY OF
EIGENVALUES
FROM THE
LARGEST ONE.

NOISE
LEVEL

MAGNITUDE OF
EIGENVALUE

ORDER OF EIGENVALUES
(IN DESCENDING ORDER)

FIG.8

907

PRIVATE KEY GENERATING SECTION

317

EIGENVALUE
SELECTION
SECTION

327

QUANTIZ-
ATION
SECTION

337

KEY
GENERATING
SECTION

927

MISMATCH
CORRECTION
SECTION

EIGENVALUE

PRIVATE
KEY

917

MISMATCH CORRECTION
CONTROLLING SECTION

FIG.9

IN THE CASE WHERE EIGENVALUE IS SMALL.

IN THE CASE WHERE EIGENVALUE IS LARGE.

NOISE LEVEL

NOISE LEVEL

MAGNITUDE OF EIGENVALUE

REDUNDANT DATA

REDUND-ANT DATA

QUANTI-ZATION

QUANTI-ZATION

MISMATCH CORRECTION (ERROR CORRECTION)

MISMATCH CORRECTION (ERROR CORRECTION)

BEFORE CORRECTION OF MISMATCH BETWEEN PRIVATE KEY DATA.

AFTER CORRECTION OF MISMATCH BETWEEN PRIVATE KEY DATA.

FIG.10

FIG.11

MAGNITUDE OF
EIGENVALUE

FREQUENCY

FREQUENCY RESPONSE
OF EIGENVALUE

QUANTIZATION

A PLURALITY OF DATA
GROUPS WITH A LONG DATA
LENGTH

COMBINATION

GENERATE A PRIVATE KEY
WITH A LONG DATA LENGTH

FIG.12

<div style="text-align:center">**INTERNATIONAL SEARCH REPORT**</div>

| | International application No. |
|---|---|
| | PCT/JP2005/012564 |

**A. CLASSIFICATION OF SUBJECT MATTER**
*H04L9/08* (2006.01), *H04J15/00* (2006.01), *H04Q7/38* (2006.01),
*H04B7/04* (2006.01)

According to International Patent Classification (IPC) or to both national classification and IPC

**B. FIELDS SEARCHED**

Minimum documentation searched (classification system followed by classification symbols)
*H04L9/08* (2006.01), *H04J15/00* (2006.01), *H04Q7/38* (2006.01),
*H04B7/04* (2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | John E. Hershey, Amer A. Hassan and Rao Yarlagadda, "Unconventional Cryptographic Keying Variable Management" IEEE TRANSACTIONS ON COMMUNICATIONS, 1995.01, Vol.43, No.1, pages 3 to 6 | 1-8 |
| A | Motoki HORIIKE, Shuichi SASAOKA, "Rikujo Ido Tsushinro no Fukisoku Hendo ni Motozuku Himitsu Kagi Kyoyu Hoshiki", The Institute of Electronics, Information and Communication Engineers Gijutsu Kenkyu Hokoku RCS2002-172 to 180, 11 October, 2002 (11.10.02), The Institute of Electronics, Information and Communication Engineers, Vol.102, No.374, pages 7 to 12 | 1-8 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 October, 2005 (04.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/012564 |

C (Continuation).   DOCUMENTS CONSIDERED TO BE RELEVANT

| Category* | Citation of document, with indication, where appropriate, of the relevant passages | Relevant to claim No. |
| --- | --- | --- |
| T,A | Yoshihiko OGAWA, Shuichi SASAOKA, Tomohiro IMAI, Yasuaki YUDA, Kenichi MIYOSHI, Koichi HONMA, "MIMO-OFDM System ni okeru Sokan Gyoretsu no Koyuchi Hendo ni Motozuku Himitsu Kagi Kyoyu Hoshiki no Kento", The Institute of Electronics, Information and Communication Engineers Gijutsu Kenkyu Hokoku RCS2004-236 to 258, 19 January, 2005 (19.01.05), The Institute of Electronics, Information and Communication Engineers, Vol.104, No.597, pages 127 to 132 | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003273856 A
- JP 2004222389 A